(19) Europäisches Patentamt
European Patent Office
Office européen des brevets

(11) **EP 2 528 207 A1**

(12) **EUROPEAN PATENT APPLICATION**

(43) Date of publication:
**28.11.2012 Bulletin 2012/48**

(51) Int Cl.:
*H02K 21/40* (2006.01)      *H02K 21/42* (2006.01)

(21) Application number: **11167080.8**

(22) Date of filing: **23.05.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Delphi Automotive Systems Luxembourg SA**
**4940 Bascharage (LU)**

(72) Inventor: **Farah, Philippe Siad**
**54400 Longwy (FR)**

(74) Representative: **Office Freylinger**
**P.O. Box 48**
**8001 Strassen (LU)**

(54) **Brushless electric machine**

(57)    An electric machine comprises a first stator (12) having a set of magnetic elements (14) adapted to form a predetermined number of magnetic pole pairs; and a wound, second stator (16) separated from the first stator (12) by an air gap and having one or more phases of armature coils (18i) adapted to form a predetermined number of magnetic pole pairs. A rotor member (20) is located in the air gap and has a predetermined number of pole pieces (22). A controller 23 drives the coils of the second stator.

Fig. 1

EP 2 528 207 A1

**Description**

FIELD OF THE INVENTION

The present invention generally relates to electric machines, and in particular to an electric machine for use as motor/actuator or generator that does not require brushes, slip rings and the like.

BACKGROUND OF THE INVENTION

As it is well known, the term electric machine is generally used to designate electromechanical energy converters, i.e. devices able to convert, for electric motors, electricity into mechanical power and vice-versa for generators. The movement involved in the mechanical power can be rotating or linear.

A conventional electric machine comprises two main components: the armature and the field component. The field component creates a magnetic field for the armature to interact with, so that it can comprise either permanent magnets, or electromagnets formed by a conducting coil. The armature, in contrast, must carry current so that it is always a conductor or a conductive coil. The armature's role is two-fold: carry current crossing the field to create torque/force; and generate an electromotive force.

Amongst those electric machines, electromagnetic-rotor machines are by far the most common. Depending on the type of electric machine (DC, AC, permanent magnets, brushless, etc.), the armature and field component can be alternately on the rotor or on the stator.

The rotor design is always more critical as that of the stator, due to its rotating motion. In the case of a rotor with permanent magnets, one industrial difficulty is to achieve a durable and reliable mounting of the magnets, which are subject to centrifugal forces under rotation.

In the case of a wound rotor, brushes and slip rings are required to transfer the current to the winding under rotation. The wear of these brushes and slip rings leads to operating failures.

OBJECT OF THE INVENTION

The object of the present invention is to provide an electric machine that is of simple design, durable and does not require brushes, slip rings and the like.

This object is achieved by an electric machine as claimed in claim 1.

SUMMARY OF THE INVENTION

According to the present invention, an electric machine for use as generator or motor comprises:

a first (fixed) stator comprising a set of magnetic elements adapted to form a predetermined number of magnetic pole pairs;

a wound, second (fixed) stator separated from the first stator by an air gap and having one or more phases of coils adapted to form a predetermined number of magnetic pole pairs;

a mobile member located in said air gap and having a predetermined number of pole pieces;

a controller for driving the coils of the second stator.

The present invention thus proposes an electric machine having only one mobile member: the mobile member with pole pieces. Depending on its use as motor or generator, the mobile member is coupled to a load or to a prime mover. It will be appreciated that the present electric machine is of simple design in that it does not require any slip rings, brushes or the like, the only moving part being the mobile part with pole pieces that does not require any supply of current. Furthermore, the mounting of the pole pieces is easy and cost effective.

The wound, second stator acts as armature, whereas the first stator acts as field component and produces the exciting magnetic field. In operation, the armature stator sees a moving magnetic field resulting from the first stator and the mobile member, and the second stator coils may then be controlled accordingly (synchronously or asynchronously)

As it is used herein, the term "pole" designates a region of a stator of given polarity. The term "pole pair" then means that there is one North pole and one South pole. As it will be understood by those skilled in the art, one magnetic pole can consist of one magnetic element or a group of neighbouring magnetic elements of same polarity.

The term "pole pieces", in turn, designates pieces of magnetically permeable material, for example ferromagnetic material.

The mobile member is preferably simply designed as a support/carrier for the pole pieces and consists of material that is both non-electrical and nonmagnetic conductive.

For ease of control and stability, the second stator shall preferably comprise three or more phases of driving coils.

Additionally, for an improved transfer of torque in the electric machine, the number of magnetic pole pairs and of pole pieces are selected to verify one of the following relationships:

$$ns=pl+ph \; ; \; ns=ph-pl \text{ and } ns=pl-ph$$

where ns is the number of pole pieces in the mobile element; and *ph* and *pl* indicate the number of pole pairs in a respective stator.

In a preferred embodiment, the stators and mobile member are arranged in radial, concentric configuration. The mobile member thus takes the form of a rotor with circumferentially distributed pole pieces. The first stator may be the internal stator, while the second stator arranged as surrounding external stator, or inversely. Since the stators are fixed, their design is simplified since constraints linked with mobile parts are avoided. This is of particular interest for the field stator, which generates the exciting field. In the context of the present electric machine the poles of the first stator may thus be formed by: permanent magnets (either surface mounted or interior type), electromagnets (possibly with interpolar permanent magnets), or even flux concentration magnets with low costs magnets.

Alternatively, the present electric machine may be implemented for operation in axial configuration, as it is clear for those skilled in the art, where the mobile part is an annular rotor with pole pieces arranged between two parallel annular stators.

Furthermore, the present electric machine can be configured as a linear machine, where the stators are flat and define a longitudinal gap in which the mobile member with pole pieces is arranged.

These and other preferred embodiments are recited in the appended dependent claims.

The present electric machine finds application either as motor (i.e. when coupled to a load, for actuation) or as a generator (i.e. when coupled to a prime mover and converting mechanical power into electrical power) in a variety of technical fields.

The present electric machine finds particular application in automotive vehicles. In this context, the electric machine may be part of the starter arrangement of an internal combustion engine which comprises a crankshaft coupled to a flywheel and where the starter arrangement can be selectively coupled to said flywheel for starting the engine. Alternatively, the present electric machine may be part of an alternator arrangement coupled to the engine crankshaft.

Moreover, the present electric machine may be used to drive a variety of components in an automotive vehicle such as e.g. a compressor or a pump (water, oil, fuel, etc.).

These examples are not to be construed as limitative and the person skilled in the art may figure out a variety of applications for the present electric machine.

BRIEF DESCRIPTION OF THE DRAWINGS

The present invention will now be described, by way of example, with reference to the accompanying drawings, in which:

FIG. 1: is a principle diagram of a first embodiment of an electric machine in accordance with the invention;

FIGS. 2 to 4: are principle diagrams of further embodiments of the electric machine in accordance with the invention;

FIG. 5: is a partial view of an inner stator according to a further embodiment;

FIG. 6: is a principle diagram of another radial embodiment of the present electric machine;

FIG. 7: is a diagram corresponding to the embodiment of Fig.1;

FIG. 8: is a diagram of an electric machine with inversed stators as compared to Fig.7; and

FIG. 9: is a diagram of an axial implementation of the present electric machine.

DETAILED DESCRIPTION OF A PREFERRED EMBODIMENT

Several embodiments of the present electric machine are described hereinbelow in detail with reference to the attached Figures. The illustrated embodiments concern electromechanical energy converters involving a rotating movement for the power conversion, which may be used as motors or generators.

The present machine comprises two stators separated by an air gap, in which a rotor is arranged. As it will appear from the below description, one stator is configured to act as field member and the other as armature. Both stators are fixed and the only mobile part is the rotor, which comprises a set of pole pieces of, e.g., ferromagnetic elements, which is then coupled to the load, as a motor, or to a prime mover, as a generator.

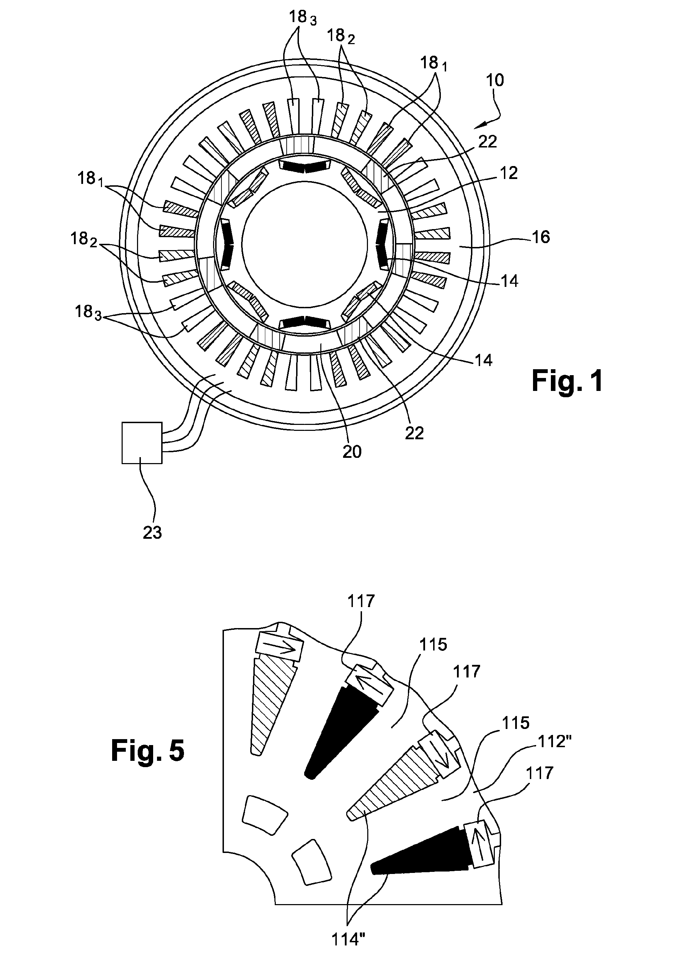

Referring to the first embodiment shown in Fig.1, the electric machine 10 comprises an inner stator 12 acting as field member and having 8 magnetic poles (i.e. 4 pole pairs) formed by 8 permanent magnets indicated 14. As can be seen, the permanent magnets are circumferentially distributed and arranged to have alternating polarities (a North pole is followed, in circumferential direction by a South pole, the latter being followed by a North pole, and so on). The stator 12 has a general shape of sleeve, in which the magnets 14 are embedded in a salient manner to provide reluctance torque.

The second stator 16, acting as armature, is a wound stator configured to form 6 poles. Advantageously, it comprises in this embodiment 3 phases of conductive coils for each pole, where the 3 phases forming one pole are noted $18_1$, $18_2$ and $18_3$).

The mobile member is indicated 20 and comprises a set of 7 pole pieces 22 made from ferromagnetic material. The mobile member is essentially designed as moving carrier for the pole pieces 22 and is made from nonmagnetic and non-electric conductive material, e.g. 304L stainless steel or plastic.

Reference sign 23 indicates a controller for driving the coils of the second stator 16.

The principle of operation of such electric machine 10 is comparable to a conventional electric machine. The wound stator 16 interacts with a rotating magnetic field resulting from the combined effects of the excitation stator 12 and the rotor 20. The field element is thus formed, so to speak, by the combination of the rotor 20 and the field stator 12. One great benefit of this configuration is however its simplicity, since the only moving part is the rotor 20 with pole pieces 22. There is no need to supply current to rotor 20 and hence no need for brushes, slip rings and the like. Also, the mounting of pole pieces on a rotating member is much simpler than the arrangement of coils or permanent magnets.

The armature stator 16 advantageously comprises three phases of coils/windings, which is favourable in terms of control and stability, as it is known in the art.

Furthermore, for an improved transfer of torque, the number of magnetic poles and pole pieces is set to meet one of the following relationships:

$$ns = pl + ph \; or \; ns = ph - pl \; or \; ns = pl - ph$$

where *ns* is the number of pole pieces in the mobile element (rotor), and *ph* is the number of poles pairs in one stator and *pl* the number of pole pairs in the other stator.

When one of these relationships is satisfied, each stator sees a same number of poles on the respective side of the rotor with pole pieces. Assume excitation stator 12 has pl pole pairs, rotor 20 with ns ferromagnetic pole pieces will modulate the stator 12 field density. This field density will actually exhibit lots of harmonics, and typically one of the biggest harmonics created in the airgap between rotor 20 and the second stator 16 will be of *ns-pl*. Indeed, as it is known in the art, in order to transmit torque, two magnetic parts shall have the same number of poles. As stator 16 has ph poles, we shall have:

$$ph = ns - pl \; or \; ns = pl + ph.$$

Accordingly, the ferromagnetic pole pieces in the rotor modulate the flux density and help transforming each stator into a stator with a different number of poles.

As applied to the embodiment of Fig.1, the rotor comprises 7 poles pieces *(ns=7)*, the inner, field stator has 8 magnetic poles (*pl*=4) formed by permanent magnets and the outer, armature stator has 6 poles (*ph*=3).

The situation at the outer gap (air gap in-between the rotor and outer stator) is that the rotor 20 transforms the magnetic flux from the 8-pole member into a 6-pole member, which corresponds to the number of poles in the armature stator 16:

*ns-pl=7-4=3*, which corresponds to the number *ph* of pole pairs in the outer stator (and thus 2x3=6 poles).

At the inner gap, the rotor 20 with poles pieces transforms the flux from the 6-pole outer stator 16 so that the inner stator 12 sees an equal number of poles. Applying the formula, we have:

*ns-ph=7-3=4,* which corresponds to the number *pl* of pole pairs in the inner stator (and thus 2x4=8 poles).

The control of such electric machine 10 may thus be carried out in a similar manner as for a conventional synchronous AC electric machine, where the rotating speed is function of the current frequency in the armature windings (in stator 16) and of the number of poles, as it is known in the art.

Accordingly, considering that we have a stator and a single rotor with a set of ns ferromagnetic pole pieces, the control of the machine requires determining the electric angle, which depends on the rotor position and is expressed:

$$\theta_{electric} = n_s \cdot \theta_{mechanic}$$

where $\theta_{electric}$ is the electric angle and $\theta_{mechanic}$ the measured angular position of the rotor. The controller then controls the supply of the stator phases on the basis of $\theta_{electric}$, for example through a coil drive circuitry (not shown) featuring a pre-driver, gates and a power bridge.

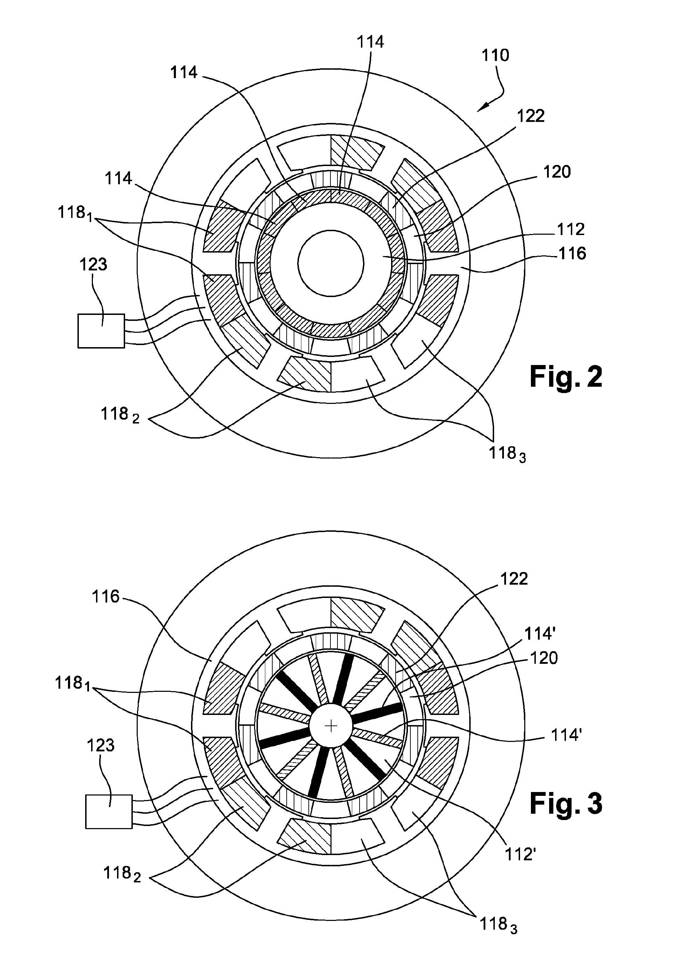

As already mentioned, a great benefit of the present electric machine is that the only rotating part is the mobile element with the pole pieces, which allows for a diversity of designs of the stators. Indeed, while the armature stator requires AC windings, the other stator acting as field element may be based on various designs, as it will be understood from Figs. 2 to 4. In particular, since the "field" stator does not move, various designs can be adopted that the skilled person may otherwise refrain from using with mobile parts.

Turning to the embodiment of Fig.2, the electric machine 110 comprises an inner stator 112 acting as field member and comprising 12 magnetic poles (i.e. 6 pole pairs) formed by 12 permanent magnets 114. As compared to the embodiment of Fig.1 where the permanent magnets 14 are embedded in an annular metallic core, the permanent magnets are here mounted onto the external surface of the annular metallic core of the stator 112. A surface mounting is typically to be avoided for a high-speed rotor of a conventional electric machine, but this part is not moving here. Again, the magnets 114 are circumferentially distributed with alternating polarities.

The second stator 116, acting as armature, is a wound stator configured to form 2 poles. Advantageously, it comprises in this embodiment 3 phases of conductive coils for each pole, the phases being indicated $118_1$-$118_3$.

An annular rotor 120 carries a set of 7 pole pieces 122.

The situation at the outer gap is that the rotor 120 transforms the magnetic flux from the 12-pole stator 112 into a 2-pole member, which corresponds to the number of poles 118 in the armature stator 116:

*ns-pl=7-6=1,* which corresponds to the number of *ph* pole pairs in the outer stator (i.e. 2x1=2 poles).

At the inner gap, the rotor 120 with poles pieces 122 transforms the flux from the 2 pole outer stator 116 so that the inner stator 112 sees an equal number of poles. Applying the formula, we have:

*ns-ph=7-1=6,* which corresponds to the number *pl* of pole pairs in stator 112 (thus 2x6=12 poles).

Still another possible design of the field stator is shown in Fig.3. Same reference numbers are used as in Fig. 2, since the outer stator 116 and rotor 120 are the same. The inner stator, here indicated 112', differs in that it comprises so-called "flux concentration" permanent magnets 114' embedded in the metallic stator structure. These are permanent magnets made from low cost material. They are arranged radially with alternating polarities in circumferential direction. While the fixation of such magnets 114' may be difficult on a rotor, this is not an issue in a static part.

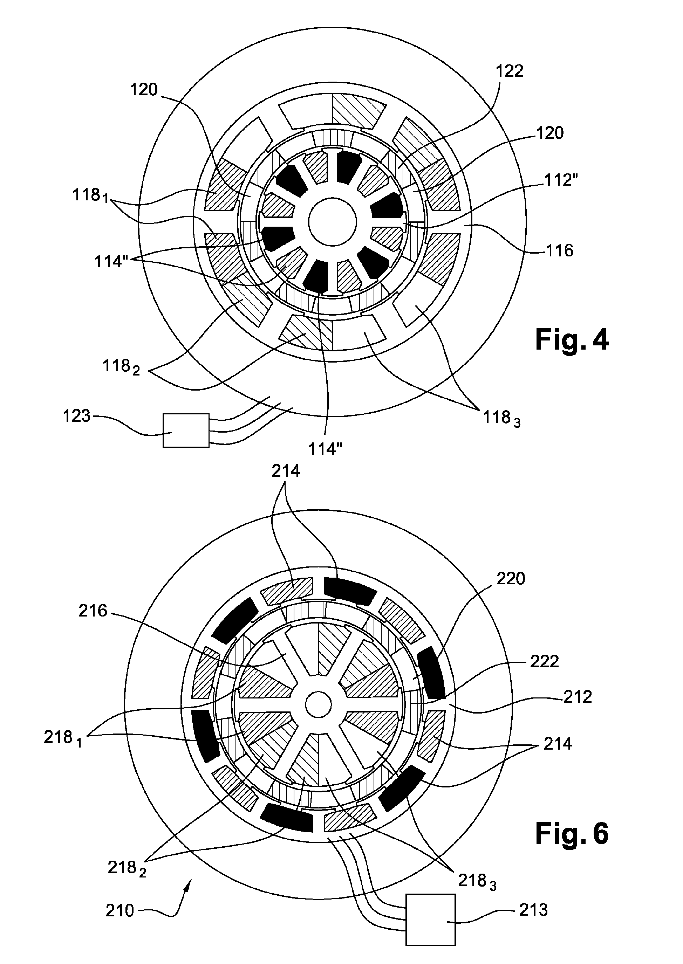

A further possible design is illustrated in Fig.4, where again the outer stator 116 and rotor 120 are similar to those of Fig.2, but on the inner, field stator 112" the magnetic poles, here 12 poles, are formed by electromagnets 114". The use of electromagnets is not problematic since this part is not moving.

For an improved circulation of magnetic flux, the field stator 112" may have hybrid design combining electromagnet windings 114" and interpolar permanent magnets. This is illustrated on Fig.5, where the stator slots 115 are closed by permanent magnets 117 oriented with their poles tangential to the circumference of the stator, the magnets being oriented with opposite polarities between two neighbouring slots 115.

Turning now to Fig.6, there is shown an alternative radial configuration of the present electric machine, however with the field stator and armature stator inversed, as compared to the previous embodiments. The electric machine 210 thus comprises an outer stator 212 acting as field member and comprising 12 magnetic poles formed by electromagnets 214. The inner stator 216, acting as armature, is a wound stator configured to form 2 poles and comprises 3 phases of conductive coils for each pole, indicated $218_1$-$218_3$.

A rotor 220 is arranged in the air gap between the stators 212 and 216 and comprises a set of 7 circumferentially distributed pole pieces 222, similar to the rotors described above.

The situation at the outer gap is that the rotor transforms the magnetic flux from the 2-pole inner stator 216 into a 12-pole member, which corresponds to the number of poles in the outer stator 212:

7-1 =6, which corresponds to the number of pole pairs in the outer stator (thus 2x6=12 poles).

At the inner gap, the rotor with poles pieces transforms the flux from the 2 pole outer stator 212 so that the inner stator 216 sees an equal number of poles. Applying the formula, we have:

7-6=1, which corresponds to the number of pole pairs in the armature (thus 2x1=2 poles).

The construction of the stators may be conventional. They are typically made from ferromagnetic metal sheets and conformed in the desired shape. Here, in the radial configuration, the wound armature stators conventionally feature a set of slots. The required number of slots (Z) is typically proportional to the number of phases (m) and the number of poles (p). Taking the example of Fig.2 where stator 116 has two pole pairs, Z=3*2=6 slots.

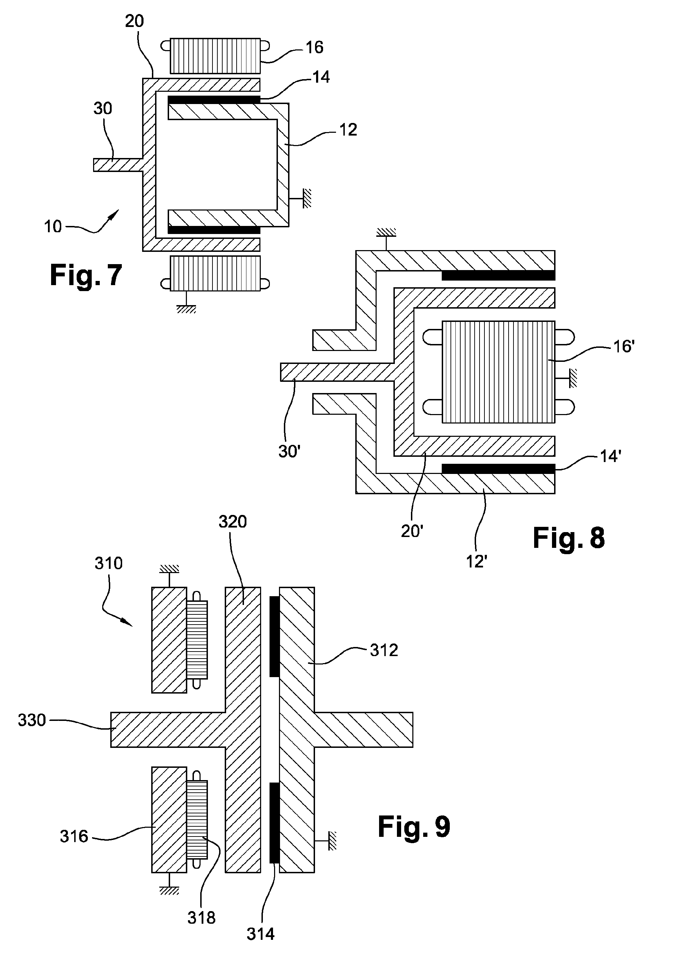

Fig.7 is another principle diagram of the electric machine of Fig.1, however seen from the mechanical viewpoint. The three main parts: the inner stator 12 with permanent magnets 14 and outer stator 16, as well as the intermediate rotor 20 with pole pieces (not shown)—in the air gap—are clearly identified. The rotor 20 is rigidly coupled to a shaft 30 that may itself be coupled to a load or to a prime mover, depending on whether the electric machine is used as motor or generator.

The inverse radial configuration is then shown in Fig.8. The rotor 20' is arranged in the air gap between the stators 12' and 16' and rotationally coupled to a shaft 30'.

Another design of the present electric machine 310 is illustrated in Fig.9, in an axial configuration. A first annular stator 312 comprises a set of permanent magnets 314 that are circumferentially distributed and face a second annular stator 316 with driving coils 318 adapted to form a number of magnetic poles. In the axial air gap in-between both stators 312 and 316, a disk-shaped or annular rotor 320 with pole pieces (not shown) is arranged and comprises a set of circumferentially distributed pole pieces. Both stators 312 and 316 are fixed and rotor 320 is connected to a shaft 330 and rotatable about the axis of this shaft 330. When respecting the above-mentioned relationships between pole pieces and magnetic poles, this electric machine can be operated in a same way as the above-described electric machines. For example, the rotor 320 may comprise 7 pole pieces, the second stator 316 may have three phases of coils forming 1 pole pair and the first stator may comprise electromagnets forming 6 pole pairs.

**Claims**

1. An electric machine comprising:

   a first stator (12; 112; 112'; 112"; 212; 312) comprising a set of magnetic elements (14; 114; 114'; 114"; 214; 314) adapted to form a predetermined number of magnetic pole pairs;
   a wound, second (fixed) stator (16; 116; 216; 316) separated from the first stator by an air gap and having one or more phases of coils ($18_i$; $118_i$; $218_i$; 318) adapted to form a predetermined number of magnetic pole pairs;
   a mobile member (20; 120; 220; 320) located in said air gap and having a predetermined number of pole pieces (22; 122; 222);
   a controller (23; 123; 213) for driving the coils of the second stator.

2. The electric machine according to claim 1, wherein the number of magnetic pole pairs and of pole pieces (22) are selected to verify one of the following relationships:

   *ns=pl+ph, ns=ph-pl and ns=pl-ph,*

   where *ns* is the number of pole pieces (22) and *ph* and *pl* represent the number of pole pairs in a respective stator.

3. The electric machine according to claim 1 or 2, wherein said second stator (16; 116; 216) comprises three phases

of coils ($18_i$; $118_i$; $218_i$) per magnetic pole.

4. The electric machine according to any one of the preceding claims, wherein the set of magnetic elements on said first stator (12; 112; 112'; 112"; 214) comprises electromagnets (114") and/or permanent magnets (14; 114; 114').

5. The electric machine according to any one of the preceding claims, wherein only said mobile member (20) is arranged in said air gap.

6. The electric machine according to any one of the preceding claims, wherein said stators (12; 16) and mobile member (20) are arranged in radial, concentric configuration.

7. The electric machine according to any one of the preceding claims, wherein said stators and mobile member are arranged in axial or in linear configuration.

8. Use of the electric machine as claimed in any one of the preceding claims as a motor or generator, namely in a vehicle as starter motor or alternator.

9. An internal combustion engine comprising a crankshaft coupled to a flywheel and a starter arrangement that can be selectively coupled to said flywheel for starting said engine, wherein said starter arrangement includes an electric machine according to anyone of the claims 1 to 7.

10. An internal combustion engine comprising a crankshaft coupled to an alternator arrangement, wherein said alternator arrangement includes an electric machine according to anyone of the claims 1 to 7.

**Fig. 1**

**Fig. 5**

Fig. 2

Fig. 3

120

122

120

112"

116

118₁

114"

118₂

118₃

123

114"

**Fig. 4**

214

216

220

222

212

218₁

214

218₂

218₃

210

213

**Fig. 6**

Fig. 7

Fig. 8

Fig. 9

Europäisches
Patentamt

European
Patent Office

Office européen
des brevets

**EUROPEAN SEARCH REPORT**

Application Number

EP 11 16 7080

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 1 196 213 A (KURAKIN ALEXANDR SERGEEVICH [RU]; JUFEROV FEDOR MIKHAILOVICH [RU]) 24 June 1970 (1970-06-24) | 1,4-6, 8-10 | INV. H02K21/40 H02K21/42 |
| Y | * page 2, line 3 - line 58 * * page 2, line 118 - page 3, line 3 * ----- | 2,3,7 | |
| Y | WO 98/36487 A1 (TOEROEK VILMOS [IT]) 20 August 1998 (1998-08-20) * page 5, line 35 - page 9, line 9 * ----- | 2,3,7 | |
| A | WO 2009/147377 A1 (MAGNOMATICS LTD [GB]; RENS JAN JOZEF [GB]; ATALLAH KAIS [GB]) 10 December 2009 (2009-12-10) * abstract * ----- | 1-10 | |
| A | WO 2009/147378 A1 (MAGNOMATICS LTD [GB]; RENS JAN JOZEF [GB]; ATALLAH KAIS [GB]) 10 December 2009 (2009-12-10) * abstract * ----- | 1-10 | |

| | |
|---|---|
| TECHNICAL FIELDS SEARCHED (IPC) | |
| H02K | |

The present search report has been drawn up for all claims

| Place of search | Date of completion of the search | Examiner |
|---|---|---|
| Munich | 13 December 2011 | Frapporti, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 16 7080

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2011

| Patent document cited in search report | | | Publication date | Patent family member(s) | | Publication date |
|---|---|---|---|---|---|---|
| GB 1196213 | A | | 24-06-1970 | NONE | | |
| WO 9836487 | A1 | | 20-08-1998 | EP | 0960465 A1 | 01-12-1999 |
| | | | | SE | 9700477 A | 13-08-1998 |
| | | | | WO | 9836487 A1 | 20-08-1998 |
| WO 2009147377 | A1 | | 10-12-2009 | EP | 2301139 A1 | 30-03-2011 |
| | | | | US | 2011163623 A1 | 07-07-2011 |
| | | | | WO | 2009147377 A1 | 10-12-2009 |
| WO 2009147378 | A1 | | 10-12-2009 | GB | 2472752 A | 16-02-2011 |
| | | | | US | 2011127869 A1 | 02-06-2011 |
| | | | | WO | 2009147378 A1 | 10-12-2009 |

EPO FORM P0459

For more details about this annex : see Official Journal of the European Patent Office, No. 12/82